# EUROPEAN PATENT SPECIFICATION

(11) **EP 2 800 657 B1**
(45) Date of publication and mention of the grant of the patent: **16.03.2016**
(21) Application number: 13702731.4
(22) Date of filing: 03.01.2013
(51) Int. Cl.: B29C 33/30, B29C 33/38, B29L 31/08, B29C 33/40, B29K 105/12, B29K 105/04

(54) **MASTER MODEL STRUCTURE**
MASTERMODELLSTRUKTUR
STRUCTURE DE MODÈLE- MAÎTRE

(30) Priority: 04.01.2012 DK 201200014
(43) Date of publication of application: 12.11.2014
(73) Proprietor: Dencam Composite A/S, 5600 Fåborg (DK)
(72) Inventor: JENSEN, Peder Mohr, DK-7000 Fredericia (DK)
(74) Representative: Skov, Anders
(86) International application number: PCT/DK2013/000003
(87) International publication number: WO 2013/102463

(56) References cited:
- EP-A1- 2 311 621
- US-A1- 2002 096 620
- US-A1- 2009 084 932
- US-A1- 2011 285 056

## Description

### Field of the Invention

The invention relates to a surface of a master model structure for moulding of large objects such as hulls, wind turbine blades and wind turbine nacelles. The invention also relates to a method for making a master model surface. Finally, the invention relates to the use of a master model structure according to the invention.

### Background of the Invention

The last decades have introduced a still on-going growth in wind turbine size. Large wind turbines have blades and nacelles that normally are manufactured by moulding processes that applies large complex moulds, so-called master models or master plugs. Accordingly, there is a growing need for master model for moulding of large wind turbine blades and nacelles.

Typically, the master models are manufactured by creating a structure to which several large frames are attached. A plurality of rods or pipes, extending along the longitudinal axis of the structure is hereafter attached to the surface of the frames. A perforated plate or a grid is then fixed to the rods or pipes. The perforated plate or grid is hereafter laminated by glass fibre layer and screws may additionally be screwed into the glass fibre layer. Now a foam layer (e.g. polyurethane foam) is added to the hardened glass fibre layer and when the foam layer is hardened it is milled in order to achieve a desired geometry. A second glass fibre layer is then added to the milled foam layer. Finally, a finishing layer of epoxy or polyurethane foam is added to the hardened second glass fibre layer. The finishing layer is now being milled in order to achieve the final geometry.

The process of providing such master model surface is very time consuming and expensive.

Furthermore, in this prior art master model, problems may be encountered in relation to establishment of the desired vacuum when the master model is used for manufacturing of a mould.

US2009/084932 A1 relates to a mould for a wind turbine blade. The mould comprises a support structure upon which are arranged a number of joists. The joists each have an upper surface the shape of which in combination with the shape of the upper surfaces of the other joists determine the shape of the mould surface. On the upper surfaces of joists is layered a flexible frame which is coated with a layer of foam, such as polyurethane foam. US2009/084932 A1 does not disclose that a glass fibre layer is added to one or more minor areas of the flexible frame before the foam layer is attached directly to a remaining part of the flexible frame.

US 2002/096620 A1 discloses a mold for forming a composite article. The mold comprises a frame comprising a number of vertically extending ribs formed of steel sheet and having upper edges defining a desired mold surface. Upon the upper edges of the ribs is affixed a layer of perforated steel sheet. The perforated steel sheet is coated with polyurethane foam which upon curing is bonded to and interlocked with said perforated steel sheet. US 2002/096620 A1 does not disclose that a glass fibre layer is added to one or more minor areas of the flexible frame before the foam layer is attached directly to a remaining part of the flexible frame.

EP 2 311 621 A1 discloses a mold for producing wind turbine blades. The mold comprises a metal frame upon which is layered a fiberglass layer and upon this an epoxy foam. The epoxy foam is milled and a finishing layer is applied. Alternatively to application of a finishing layer, another layer of fiberglass may be added upon which another layer of epoxy foam is added. One or several epoxy layers are added to seal the surface and finally a release agent is added optionally with a finish of a Teflon layer. EP 2 311 621 A1 does not disclose the feature of application of foam directly to the metal frame as a first layer of polymeric material.

US 2011/285056 A1 discloses a tool for producing a rotor blade comprising a mold. The mold is supported by a support structure which is adapted to allow twisting at least one end of the mold by a twist angle. The mold of US 2011/285056 A1 does not disclose the feature of adding foam directly to an underlying grid member or the like mounted to a supporting frame.

Therefore, there is need for a master model having a surface that can be produced faster and in a less expensive way, and which additionally solved the above problem of establishing a desired vacuum.

### Object of the Invention

Accordingly, it is an object of the present invention to provide a master model surface that is faster and cheaper to produce.

It is also an object of the present invention to provide a better joining of the surface to the structure.

Finally, it is an object of the present invention to provide a master model which eliminates the problem of establishing a desired vacuum upon moulding.

### Summary of the Invention

The object of the present invention can be achieved by a master model structure having the features defined in claim 1. Preferred embodiments are defined in the dependant sub claims and explained in the following description and illustrated in the accompanying drawings.

The master model structure according to the invention is intended for moulding of large objects such as hulls, wind turbine blades and wind turbine nacelles. The master model structure comprises:
- a base member;
- a plurality of frames mechanically connected to the base member;
- a grid member or a perforated plate attached to pipe members or connection members attached to the frames and
- a surface attached to the grid member or the perforated plate; wherein the surface comprises a foam layer directly attached to the grid member or the perforated plate and that the foam fills the gabs/holes in the grid member or the perforated plate; **characterised in** that a glass fibre layer is added to one or more minor areas of the grid member or the perforated plate before the foam layer is attached directly to the remaining part of the grid member or the perforated plate.

By attaching the foam layer directly to the grid member or the perforated plate in a way in which the foam fills the gabs/holes in the grid member or the perforated plate the time consuming and expensive process of initially adding a glass fibre layer to the grid member or the perforated plate may be skipped. Moreover, the foam will flow through the holes and expend both radially and axially. The expended foam will constitute a kind of "lock members" at the back side of the grid member or the perforated plate. The "lock members" will secure a strong joining of the foam layer to the grid member or the perforated plate.

In fact an extremely strong joining of the foam layer to the grid member or the perforated plate than is achieved by attaching the foam layer directly to the grid member or the perforated plate. The joining between the foam layer and the grid member (or the perforated plate) is significantly stronger than the joining between the glass fibre layer and the grid member (or the perforated plate) used in the prior art. Therefore, no additional use of screws is required in order to achieve the required mechanical joining between the first surface layer and the grid member or the perforated plate.
In this way the master model surface can be provided in a faster, better and cheaper way.

It is preferred that the holes/gabs in the in the grid member or the perforated plate a sufficiently small so that the foam blocks all the holes/gabs.

It is moreover preferred that the thickness of the grid member or the perforated plate is sufficiently thin to allow for the foam to flow all the way through the holes/gabs so that the foam blocks the holes/gabs.

The base structure may consist of a plurality of rods attached to one another in a way so that the rods constitute a box-like structure; however, it is possible to use various types of base structures of other shapes by way of example. The rods may be massive or hollow and have any suitable geometry ensuring that the base structure has the required mechanical strength and stiffness. The box-like structure may be any grid suitable grid structure.

A plurality of frames may be mechanically connected to the base structure and the frames may be attached by using any suitable means for attachment (e.g. welding or screwing).

According to the master model structure of the invention a glass fibre layer is added to one or more minor areas of the grid member or the perforated plate is before the foam layer is attached directly to the remaining part of the grid member or the perforated plate. The minor area is preferably an area that is critical very with respect to vacuum tightness with regard to the moulding process to which the master model structure is intended to be used.

By the term minor areas is meant an area that is significantly smaller than the total area. The minor area may be less than 20%, preferably less than 10% of the total area.

It may be beneficial that one glass fibre layer is added to each of the lateral sides of the grid member or the perforated plate is before the foam layer is attached directly to the remaining part of the grid member or the perforated plate.

By the term lateral side is meant a boundary area located near the end area of the rid member or the perforated plate. The lateral side is preferably the area that is critical regarding the requirements for vacuum tightness of the master model structure. It is of great importance that the master model structure is vacuum tight when it has to be used in a moulding process.

It is preferred that the foam layer is milled after being hardened and that a glass fibre layer is added to the milled foam layer. The milling process may be used to achieve the exact geometry that is desired.

It may be an advantage that an epoxy layer or a foam layer is added to the hardened glass fibre layer. The added epoxy layer or a foam layer may be used a finishing layer that may be milled or treated in another way to achieve a desired structure.

The object of the present invention can be achieved by a method as defined in claim 5.

The method according to the invention is a method for making a master model structure for moulding of large objects such as hulls, wind turbine blades and master model structure nacelles, which master model structure comprises:
- a base member;
- a plurality of frames mechanically connected to the base member;
- a grid member or a perforated plate attached to pipe members or connection members attached to the frames and
- a surface attached to the grid member or the perforated plate; wherein a foam layer is attached directly to the grid member or the perforated plate in a way, in which the foam fills the gabs/holes in the grid member or the perforated plate; **characterised in** that a glass fibre layer is added to one or more minor areas of the grid member or the perforated plate before the foam layer is attached directly to the remaining part of the grid member or the perforated plate..

Hereby it is achieved that the initial adding of a glass fibre layer to the grid member or the perforated plate may be skipped. Therefore, production time and cost may be reduced compared with the prior art methods. In addition, a better mechanical joining between the first surface layer and the grid member or the perforated plate can be achieved.

According to the method of the invention a glass fibre layer is added to one or more minor areas of the grid member or the perforated plate is before the foam layer is attached directly to the remaining part of the grid member or the perforated plate. Hereby it is secured that the critical areas are vacuum tight. This is important when the master model structure (also called the master plug) is being used to manufacture a mould.

It is preferred that one glass fibre layer is added to each of the lateral sides of the grid member or the perforated plate is before the foam layer is attached directly to the remaining part of the grid member or the perforated plate. The lateral sides are typically considered to be critical with respect to vacuum tightness. Accordingly, it is desirable to add a glass fibre layer to the lateral sides.

It is preferred that the foam layer is milled after being hardened and that a glass fibre layer is added to the milled foam layer. In this way a desired shape of the foam layer may be achieved.

It may be an advantage that an epoxy layer or a foam layer is added to the hardened glass fibre layer. An epoxy layer or a foam layer is added to the hardened glass fibre layer may give the master model structure a requested finish and surface property.

It is preferred that the master model structure comprises:
- a base structure consisting of a plurality of rods attached to one another and hereby constituting a box-like structure;
- a plurality of frames mechanically connected to the a base structure, which frames are provided with recesses configured to receive connection members mechanically connecting at least a subset of the frames. The frames are attached to a protrusion member that protrudes from the base structure and is mechanically connected to the base structure.

Hereby it is achieved that the master model structure the wasted material from the cutting or punching process can be minimised due to the fact that the frames can have a significantly smaller dimension than the prior art frames.

In addition, a lighter (reduced weight) master model structure can be achieved because the protrusion member can be made in a construction that is lighter than when the prior art frames are used to construct the master model structure. By having a protrusion member, the master model structure can be made in a construction where the dimensions (thickness) of the base structure and the cross elements (e.g. cross bars) while in the same time it is possible to maintain the stiffness of the structure. The use of thinner elements makes it possible to reduce the weight of the master model structure.

The base structure may consist of a plurality of rods attached to one another in a way so that the rods constitute a box-like structure. The rods may be massive or hollow and have any suitable geometry ensuring that the base structure has the required mechanical strength and stiffness. The box-like structure may be any suitable grid structure.

A plurality of frames is mechanically connected to the base structure. This may be done by using any suitable means for attachment (e.g. welding or screwing).

The recesses may have any suitable geometry. It may be preferred that the recesses have a rectangular geometry.

The frames are attached to a protrusion member that is mechanically connected to the base structure. The protrusion member is a structure that protrudes relative to the base structure. The protrusion member preferably consists of a plurality of rods attached to one another in a way so that the protrusion member constitutes a grid structure. The rods may be massive or hollow and have any suitable geometry just like the rods used in the base structure. It is important that the rods are made so that the protrusion member has the required mechanical strength and stiffness.

It is preferred that the each frame is composed by a plurality of frame units mechanically attached to one another. Hereby, it is possible to make the frames very small so that the punching waste or cutting waste can be minimised.

It may be an advantage that the length of a frame unit is less than half the width of the base structure since frame units of this size result in a significantly reduced waste (from cutting or punching) compared to the prior art frames.

It is preferred that the length of all frame units is less than half the width of the base structure. Hereby, waste (from cutting or punching) can be reduced under production of all the frame units. In this way the largest possible waste reduction can be achieved.

It is preferred that the height of a frame unit is less than half the height of the protrusion member and/or less than half the height of the base structure. In this way the waste from cutting or punching the frame units out of a plate or sheet material can be significantly reduced.

In order to minimise the waste from cutting or punching the frame units out of a plate or sheet material, it is preferred that the height of all frame units is less than half the height of the protrusion member and/or less than half the height of the base structure.

It may be beneficial that a cross band is provided at the base structure and/or the protrusion member, which cross band is configured stabilise the base structure and/or the protrusion member. Hereby, a robust, strong and stiff construction can be achieved.

In order to achieve the most reliable construction it is preferred that a plurality of cross bands each is provided at the base structure and/or the protrusion member, which cross bands are configured to stabilise the base structure and/or the protrusion member.

It may be an advantage that the cross band is provided with a tensioning member, which tensioning member is configured to tension the cross band and hereby stabilise the base structure and/or the protrusion member. The tensioning member ensures that a required stabilisation of the base structure can be achieved.

The tensioning member may be any suitable type of tensioning member. Preferably, an easy adjustable tensioning member, so that the tension of the cross band can be adjusted when require (e.g. due to changed thermal condition causing thermal expansion or thermal contraction).

It is preferred that the frame units are modular and that each frame unit has a connection member configured to be received by a matching receiving member of an adjacent frame unit and/or a receiving member configured to be connected to a matching connection member of an adjacent frame unit.

Hereby it is achieved that a frame easily can be constructed from two or more frame units. Moreover, the use of matching connection members and receiving members makes it possible to provide an accurate assembling of adjacent frame units.

It is preferred that the master model structure is configured to be used to mould a wind turbine blade or a wind turbine nacelle.

It may be an advantage that a frame unit has a straight side configured to be attached to a plane portion of a protrusion member and an arced side, in which arced side a number of recesses are provided.

Such frame unit is highly suitable for being attached to a protrusion member made or straight rods or corresponding straight connection members. Thus attachment to the protrusion member is eased, especially when the attachment is provide by welding or screwing the frame unit and the protrusion member together. The arced side may have any desired geometry.

The method for producing a master model structure according to the invention preferably comprise the step of:
- providing a base structure consisting of a plurality of rods attached to one another and hereby constituting a box-like structure;
- mechanically connecting a plurality of frames to the a base structure, which frames are provided with recesses configured to receive connection members mechanically connecting at least a subset of the frames. The frames are being attached to a protrusion member that is mechanically connected to the base structure.

This method makes it possible to produce a master model structure in a way so that the wasted material from the cutting or punching process can be minimised. This can be achieved because the frames can have a significantly smaller dimension than the prior art frames.

The method, in addition, makes it possible to provide a less massive and thereby lighter master model structure, due to the fact that the protrusion member can be made in a light construction.

The object of the present invention can finally be achieved by a use as defined in claim 9.

This use relates to the use of a master model structure according to the invention for moulding of large objects such as hulls, wind turbine blades and nacelles.

### Description of the Drawing

The invention will become more fully understood from the detailed description given herein below. The accompanying drawings are given by way of illustration only, and thus, they are not limitative of the present invention. In the accompanying drawings:
- Fig. 1: shows a prior art base structure and a prior art base structure with frames;
- Fig. 2: shows perspective views of prior art base structure with frames;
- Fig. 3: shows is a schematically view of a prior art master model structure;
- Fig. 4: shows a master model structure not according to the invention;
- Fig. 5: is a schematically side views of two master model structures not according to the invention;
- Fig. 6: shows a close-up view of a first frame unit and a second frame unit according to the invention attached one another;
- Fig. 7: shows an example of a portion of a prior art master model structure having a grid member to which a surface is added;
- Fig. 8: shows the steps of adding additional layers to the surface shown in Fig. 7;
- Fig. 9: shows how a foam layer is added directly to a grid member of a master model structure surface according to the invention;
- Fig. 10: shows the steps of adding additional layers to master model structure surface shown in Fig. 9 and
- Fig. 11: shows a cross-sectional close-up view of a foam layer added directly to a perforate plate.

### Detailed Description of the Invention

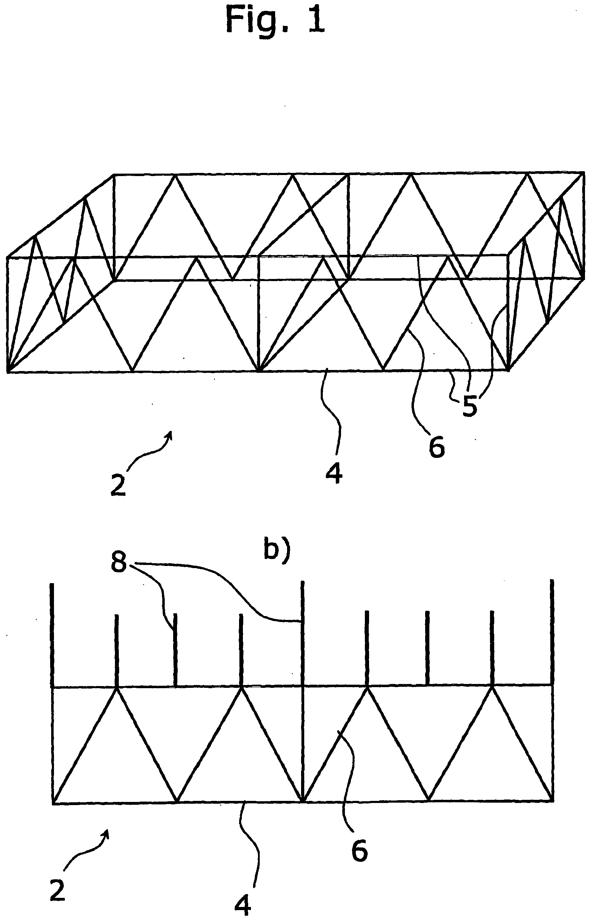

Referring now in detail to the drawings for the purpose of illustrating preferred embodiments of the present invention, a prior art base structure and a prior art base structure with frames is illustrated in Fig. 1.

The prior art base structure 2 illustrated in Fig. 1 a) comprises a base member 4 consisting of a number of steel rods 5 constituting a box-like configuration. The steel rods are reinforced by cross bars 6.

The next step in the process of producing a prior art master model structure is illustrated in Fig. 1b). Here a plurality of frames 8 has been attached to the outer surface of the base structure 2.

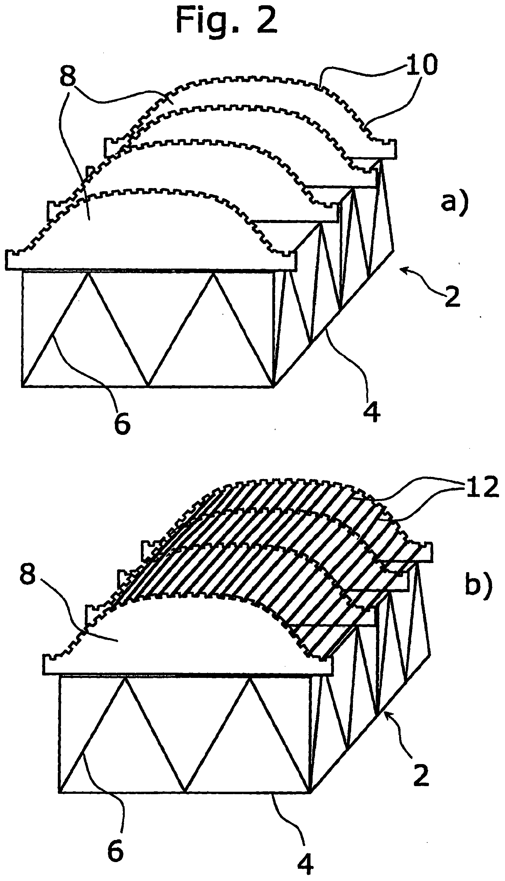

Fig. 2a) illustrates a perspective view of the base structure 2 having a plurality of frames 8 shown in Fig. 1b). A plurality of recesses 10 extend along the edge of the frames 8. These recesses 10 are configured to receive a number of longitudinal extending pipe members 12 like illustrated in Fig. 2 b).

The stiffness of the construction is mainly provided by the base structure 2 and the cross members 6 are introduced in order to increase the cross stability of the construction (the base structure 2).

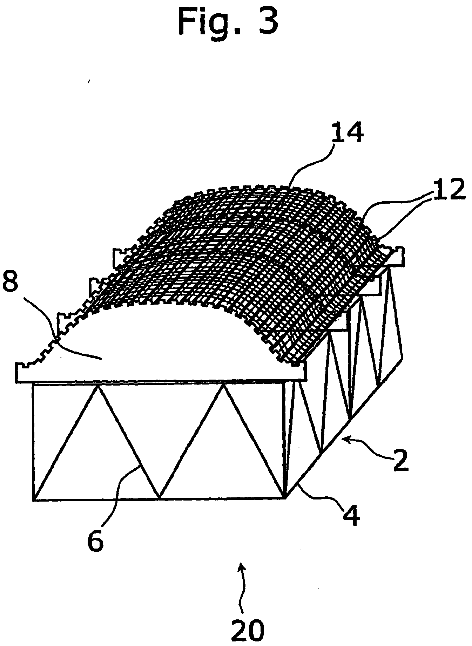

In Fig. 3 a grid member 14 has further been attached to the pipe members 12 and the flames 8. It is also possible to attach a perforated plate to the pipe members 12 and the flames 8 as an alternative to the grid member 14.

The grid member 14 (or alternatively the perforated plate) is attached to the pipe members 12 and to the flames 8 by screws or by a welding depending of the materials. The configuration shown in Fig. 3 is a typical prior art master model structure 20.

The next step of producing the master model is to cover the outer surface of the master model structure 20 with an outer layer (not shown) of a fibre reinforced polymer made of a plastic matrix reinforced by fine fibres of glass, where the fibre reinforced polymer may be made of a plastic matrix reinforced by fine glass fibres. The outer layer (not shown) can hereafter be milled in order to achieve the required finish (geometric shape).

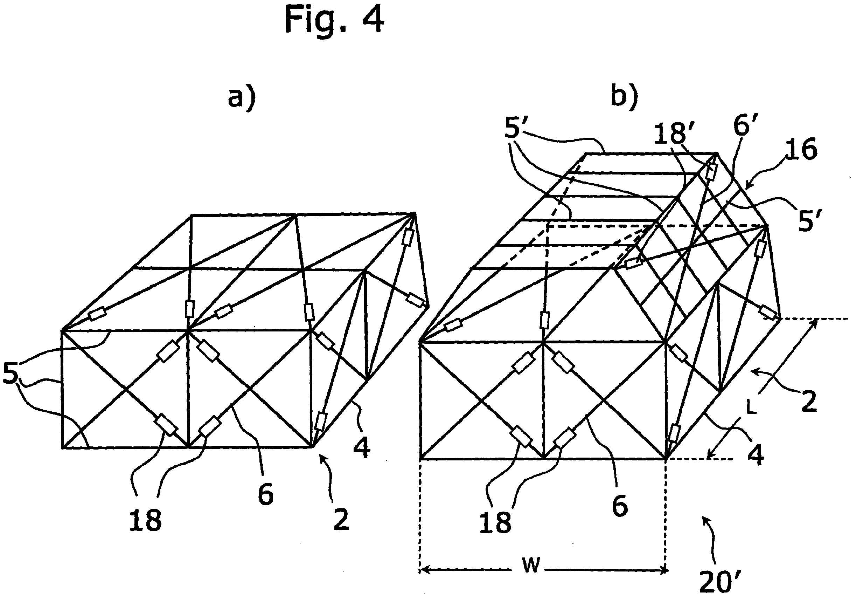

Fig. 4a) illustrates a base structure 2 according to a prior art master model structure 20' to be used with the invention. The master model structure 20' is intended to be used as a mould (a master plug) for producing large objects like blades or nacelles of a wind turbine.

The base structure 2 according to a master model structure 20' of to be used with the invention comprises a plurality of steel rods 5 arranged in a box-like configuration and hereby constituting a base construction that is reinforced by a plurality of cross members 6' formed as cross bands 6' each provided with a tensioning member 18 for tensioning the cross bands 6' and hereby stabilising the base structure 2.

In Fig. 4b) a protrusion member 16 has been attached to the base structure 2 of the master model structure 20'. The protrusion member 16 is made of a plurality of rods 5' constituting a grid structure. This grid structure is reinforced by a number of diagonally extending protrusion member 16 cross bands 6'. The cross bands are tensioned by tensioning members 18'. The length L and the width of the master model structure 20' is indicated in Fig. 4b).

Thus the protrusion member 16 is stabilised and is a stiff construction compared with the prior art construction shown in Fig. 2.

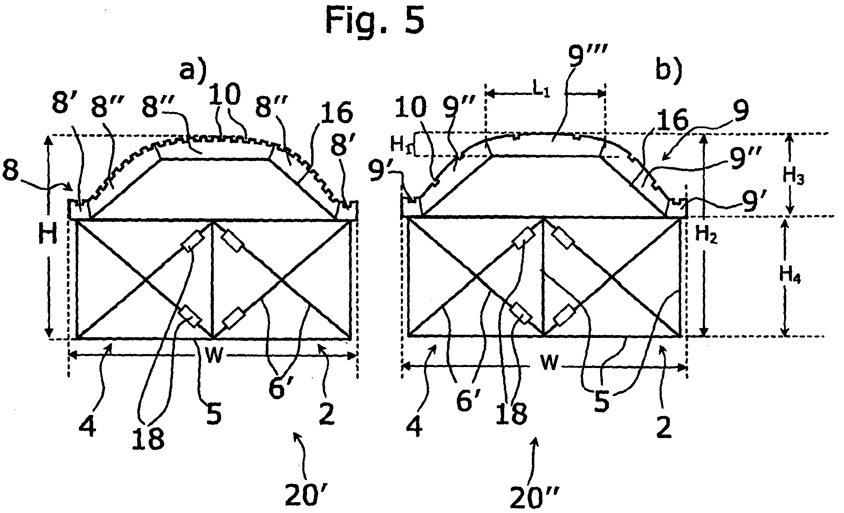

Fig. 5 illustrates two side-views of two master model structures 20', 20" to be used with the invention. In Fig. 5a) a first master model structure 20' is illustrated. The first master model structure 20' corresponds to the master model structure 20' shown in Fig. 4b) however a number of minor frame units 8', 8", 8"' have been attached to one another and constitute a frame 8. The frame 8 is attached to the outer surface of the protrusion member 16.

These minor frame units 8', 8", 8" are provided with a plurality of recesses 10 and the frame units 8', 8", 8"' may be welded together of fixed to each other two by to by using other attachment means. The frame units 8', 8", 8"' may be secured to the protrusion member 16 by welding, screws or by using other suitable fixation means.

The master model structures 20', 20" in Fig. 5a) and in Fig. 5b) both comprise a base structure 2 like the ones illustrated in and explained with reference to Fig. 2. The base structure 2 comprises several steel rods 5 arranged in a box-like configuration constituting a base construction reinforced by a plurality of cross members 6' constructed as cross bands 6'. Each cross band 6' has a tensioning member 18 configured to tension the cross band 6' in order to stabilise the base structure 2.

Fig. 5b) illustrates a side-view of a second master model structure 20" almost similar to the first master model structure 20' shown in Fig. 5a). The second master model structure 20" illustrated in Fig. 5b) comprise a number of minor frame units 9', 9", 9'" constituting a frame 9 that has been attached to the outer surface of the protrusion member 16.

Compared to the first master model structure 20' shown in Fig. 5a) the minor frame units 9', 9", 9"' attached to the outer surface of the protrusion member 16 of the second master model structure 20" are provided with significantly fewer recesses 10. However, the number of recesses 10 is sufficient to attach pipe members 12 or alternatively rods or other suitable connection members to the recesses 10 of the frames 9', 9", 9"' and attach a grid member 14 or a perforated plate thereto.

The frame 8, 9 are much smaller than the frames 8 used in the prior art (see Fig. 1, Fig. 2 and Fig. 3) and therefore, the frames 8, 9, that typically are made out of steel sheets, can be produced with a significantly reduces punching waste (from the punching process).

In fact, the frame units 8', 8", 8"', 9', 9", 9"' used in the master model structures 20', 20" according to the invention are so small that the can easily be manufactured by using standard optimisations programming for reducing the punching waste and hereby reducing the cost. Moreover, the master model structures 20', 20" having a protrusion member 16 like illustrated in fig. 4b) and in Fig. 5 is a much stronger and robust construction than the prior art construction (shown in Fig 2-3).

In Fig. 5 it is indicated that the size of the frame units 8', 8", 8"', 9', 9", 9"' are small compared with the size of the base structure 2 and the protrusion member 16. It can be seen that the height H₁ of the frame 9" is significantly smaller than the height H₂ of the master model structure 20". The height H₁ of the frame 9" is s significantly smaller than the height H₂ of the master model structure 20". In fact, the height H₁ of the frame 9" is smaller than the height H₃ of the protrusion member 16 and smaller than the height H₄ of the base structure 2.

In addition, the length L₁ of the unit frame 9" is smaller than the width W of the base structure 2. When Fig. 5 is compared to Fig. 2 it can be seen that the size of the prior art frame (see Fig. 2) corresponds to the complete size of the protrusion member 16 and the frames 9', 9", 9"' of the master model structure 20" shown in Fig. 5b). Accordingly, it is clear that the frame 9 as well as the frame units 9', 9", 9"' of the master model structure 20" shown in Fig. 5b) are much smaller than the prior art frames illustrated in Fig. 2.

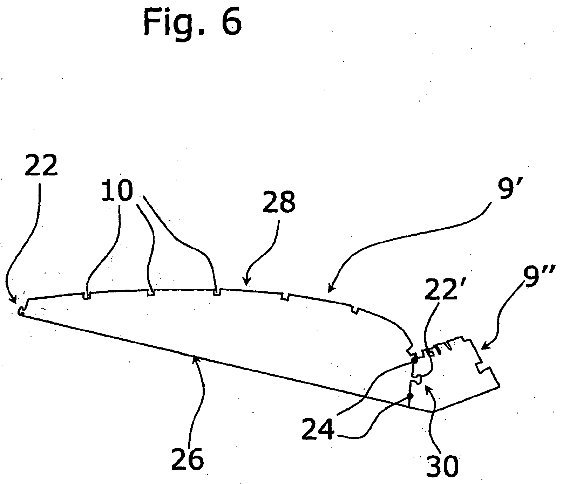

Fig. 6 illustrates a close-up view of a first frame unit 9' and a second frame unit 9" according to the invention attached one another. The first frame unit 9' has a straight side 26 configured to be attached to a plane portion of the protrusion member 16 (see Fig. 5) and an arced side 28. Five recesses 10 are provided along the arced side 28 of the first frame unit 9'.

The first frame unit 9' has a connection member 22 configured to be received by a corresponding receiving member of an adjacent frame intended to be attached to the first frame unit 9'. The first frame unit 9' is secured to the second frame 9" by means of a mechanical connection. The mechanical connection comprises a connection member 22' of the first frame unit 9' which has been received by a matching receiving member 30 of the second frame unit 9". Two point welds 24 have been added in order to keep the first frame unit 9' and the second frame unit 9" together. It is possible to use other methods to attach the frame units 9', 9" to one another. Use of fastening means such as screws may be an alternative. If the frame units 9', 9" are made out of wood it is possible to attach adjacent frame units 9', 9" by use of a plate that is attached to both frame units 9', 9" by means of screws or other means for fastening.

The frame units 9', 9" may preferably be made of metal, such as steel by way of example so that adjacent frame units can be attached to one another by welding.

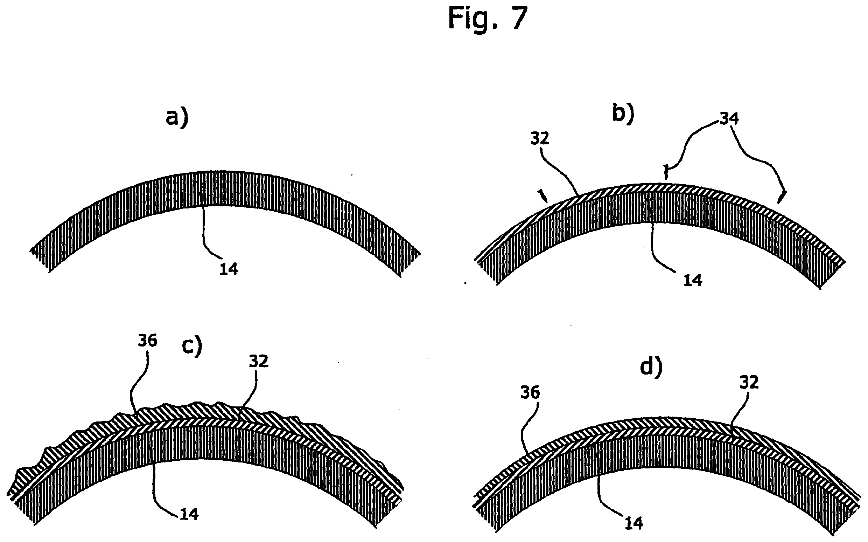

Fig. 7 illustrates an example of a portion of a prior art master model structure having a grid member 14. The grid member 14 may be attached to a plurality of pipe members or connection member like shown in Fig. 3. However, for clarity reasons only the grid member 14 is illustrated in Fig. 7.

In Fig. 7 a) no additional layers are attached to the grid member 14. In Fig. 7 b) a glass fibre layer 32 has been attached to the grid member 14. Most often it is required to screw a plurality of screws 34 through the glass fibre layer 32 when it has been hardened. The hardening process may be time consuming.

In Fig. 7 c) a foam layer 36 (e.g. polyurethane foam) has been added to the glass fibre layer 32 and in Fig. 7 d) the added foam layer 36 has been milled to the desired geometric shape. The surface of the foam layer 36 smoother in Fig. 7 d) than in Fig. 7 c).

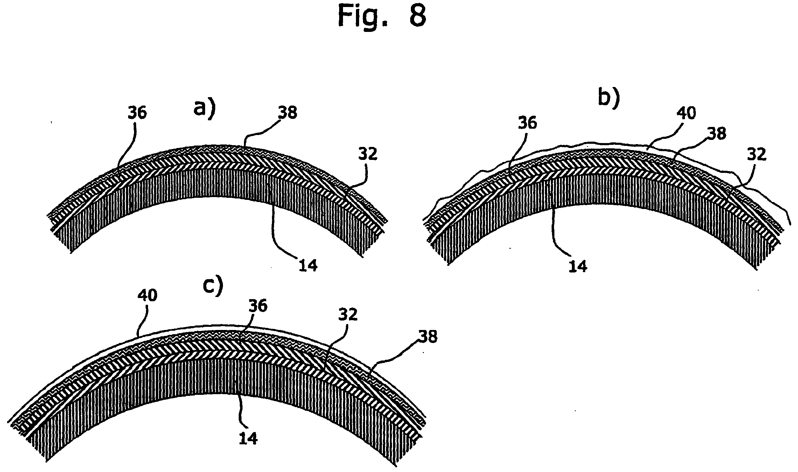

Fig. 8 illustrates the remaining steps in the production of a prior art master model structure surface. In Fig. 8 a) an additional glass fibre layer 38 has been added to the milled foam layer 36. Once the added glass fibre layer 38 has hardened, a foam layer 40 (or alternatively an epoxy layer 40) is added to the glass fibre layer 38. When the added foam layer 40 has been milled the master model structure surface is finished.

The prior art master model structure surface consists of four layers 32, 36, 38, 40.

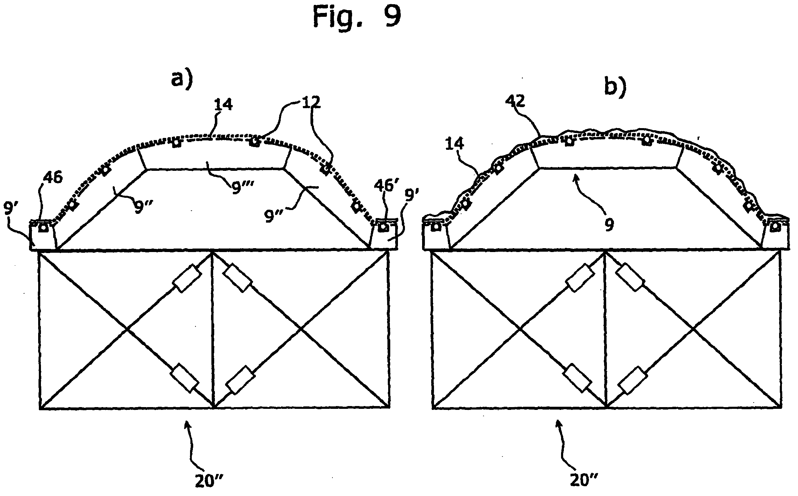

The production of a master model structure surface according to the invention is illustrated in Fig. 9-10. In Fig. 9 a master model structure 20" like the one shown in Fig. 5.

A grid member 14 is secured to the pipe members 12 fixed to the frame units 9', 9", 9"'. Two glass fibre sheet members 46, 46' (narrow lanes) have been added to the lateral portion of the grid member 14. This is done to make sure that the master model structure surface will be vacuum tight in these areas which normally are considered to be critical.

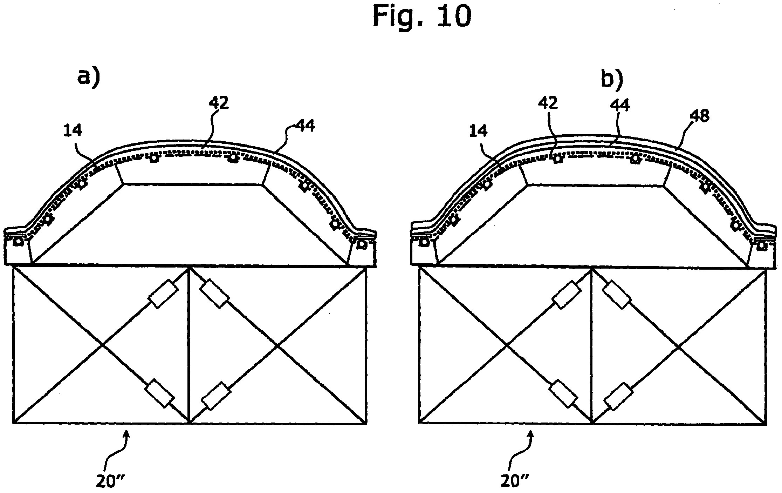

In Fig. 9 b) a foam layer 42 has been added directly to the grid member 14 and the hardened glass fibre sheet members 46, 46'. The foam layer 42 is rather uneven and thus it is milled. In Fig. 10 a) the foam layer 42 has been milled and an additional layer glass fibre layer 44 has been added to the milled foam layer 42.

When the additional glass fibre layer 44 has hardened a foam layer 48 or alternatively an epoxy layer is added to the hardened glass fibre layer 44. When the added foam layer 48 has been milled, the master model structure surface is finished.

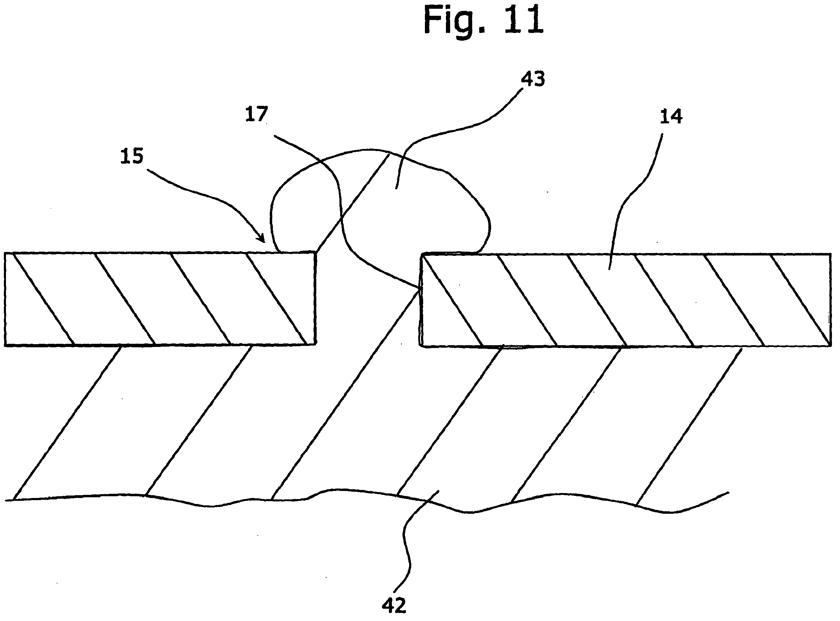

Fig. 11 illustrates a cross-sectional close-up view of a foam layer 42 that has been added to a perforated plate 14. It can be seen that the foam 42 has been filled into the hole in the perforated plate 14. At the back side 15 of the perforated plate 14 the foam has expanded both radially and axially so that the foam constitute a domed "lock member" 43.

When the foam is added to a perforated plate 14 having a plurality of holes 17 a corresponding number of "lock members" 43 will be provided. Each of these "lock members" 43 will contribute to the joining between the foam layer 42 and the perforated plate 14. Accordingly, a firmly mechanical attachment of the foam layer 42 to the perforated plate 14 can be achieved by adding the foam 42 directly to the perforated plate (14) (or alternatively to a grid member).

Above only a few embodiments of the invention have been described, however, it can easily be envisaged that several other embodiments are possible within the scope of the invention as defined in the claims. It will e.g. be possible to have embodiments where the geometry of the frame units 9', 9", 9"' is different.

**List of reference numerals**

| | |
|---|---|
| 2 | - Base structure |
| 4 | - Base member |
| 5, 5' | - Rod |
| 6, 6' | - Cross member |
| 8, 9 | - Frame |
| 8', 8", 8"' | - Frame unit |
| 9', 9", 9"' | - Frame unit |
| 10 | - Recess |
| 12 | - Pipe member/connection member |
| 14 | - Grid member |
| 15 | - Back side |
| 16 | - Protrusion member |
| 17 | - Hole |
| 18, 18' | - Tensioning member |
| 20, 20', 20" | - Master model structure |
| 22, 22' | - Connection member |
| 24 | - Weld |
| 26 | - Straight side |
| 28 | - Arced side |
| 30 | - Receiving member |
| H, H₁, H₂, H₃, H₄ | - Height |
| L, L₁ | - Length |
| W | - Width |
| 32 | - Glass fibre layer |
| 34 | - Screw |
| 36 | - Foam layer |
| 38 | - Glass fibre layer |
| 40 | - Foam layer or epoxy layer |
| 42 | - Foam layer |
| 43 | - Lock member |
| 44 | - Glass fibre layer |
| 46, 46' | - Glass fibre sheet member |
| 48 | - Foam layer or epoxy layer |

## Claims

1. A master model structure (20', 20") for moulding of large objects such as hulls, wind turbine blades and nacelles, which master model structure (20', 20") comprises:
- a base member (2);
- a plurality of frames (8, 9) mechanically connected to the base member (2);
- a grid member (14) or a perforated plate attached to pipe members or connection members attached to the frames (8, 9) and
- a surface attached to the grid member (14) or the perforated plate;
wherein the surface comprises a foam layer (42) directly attached to the grid member (14) or the perforated plate and that the foam fills the gabs/holes in the grid member (14) or the perforated plate; **characterised in that** a glass fibre layer (46, 46') is added to one or more minor areas of the grid member (14) or the perforated plate before the foam layer (42) is attached directly to the remaining part of the grid member (14) or the perforated plate.

2. A master model structure (20', 20") according to claim 1 **characterised in that** one glass fibre layer (46, 46') is added to each of the lateral sides of the grid member (14) or the perforated plate is before the foam layer (42) is attached directly to the remaining part of the grid member (14) or the perforated plate.

3. A master model structure (20', 20") according to one of the preceding claims **characterised in that** the foam layer (42) is milled after being hardened and that a glass fibre layer (44) is added to the milled foam layer (42).

4. A master model structure (20', 20") according to claim 3 **characterised in that** an epoxy layer (48) or a foam layer (48) is added to the hardened glass fibre layer (44).

5. Method for making a master model structure (20', 20") for moulding of large objects such as wind turbine blades and nacelles, which master model structure (20', 20") comprises:
- a base member (2);
- a plurality of frames (8, 9) mechanically connected to the base member (2);
- a grid member (14) or a perforated plate attached to pipe members or connection members attached to the frames (8, 9) and
- a surface attached to the grid member (14) or the perforated plate;
wherein a foam layer (42) is attached directly to the grid member (14) or the perforated plate in a way, in which the foam fills the gabs/holes in the grid member (14) or the perforated plate; **characterised in that** a glass fibre layer (46, 46') is added to one or more minor areas of the grid member (14) or the perforated plate before the foam layer (42) is attached directly to the remaining part of the grid member (14) or the perforated plate.

6. Method for making a master model structure (20', 20") according to claim 5 **characterised in that** one glass fibre layer (46, 46') is added to each of the lateral sides of the grid member (14) or the perforated plate is before the foam layer (42) is attached directly to the remaining part of the grid member (14) or the perforated plate.

7. Method for making a master model structure (20', 20") according to one of the claim 5-6 **characterised in that** the foam layer (42) is milled after being hardened and that a glass fibre layer (44) is added to the milled foam layer (42).

8. Method for making a master model structure (20', 20") according to one of the claim 5-7 **characterised in that** an epoxy layer (48) or a foam layer (48) is added to the hardened glass fibre layer (44).

9. Use of a master model structure (20', 20") according to any of the claims 1 - 4 for moulding of large objects such as hulls, wind turbine blades and nacelles.

## Patentansprüche

1. Originalmodellstruktur (20, 20") zum Formen großer Objekte, wie beispielsweise Rümpfe, Windturbinenblätter und Gondein, die Originalmodellstruktur (20', 20") umfassend:
- ein Basiselement (2);
- eine Mehrzahl von Rahmen (8, 9) mechanisch verbunden mit dem Basiselement (2);
- ein Gitterelement (14) oder perforierte Platte befestigt an Rohrelementen oder Verbindungselementen, die an dem Rahmen (8, 9) befestigt sind, und
- eine Oberfläche befestigt an dem Gitterelement (14) oder der perforierten Platte;
wobei die Oberfläche eine Schaumschicht (42) umfasst, die direkt an dem Gitterelement (14) oder der perforierten Platte befestigt ist, und wobei der Schaum die Lücken/Löcher in dem Gitterelement (14) oder der perforierten Platte ausfüllt;
**dadurch gekennzeichnet, dass** eine Glasfaserschicht (46, 46') zu ein oder mehreren kleineren Bereichen des Gitterelements (14) oder der perforierten Platte hinzugefügt wird, bevor die Schaumschicht (42) direkt auf dem übrigen Teil des Gitterelements (14) oder der perforierten Platte befestigt wird.

2. Originalmodellstruktur (20', 20") nach Anspruch 1, **dadurch gekennzeichnet, dass** eine Glasfaserschicht (46, 46') zu jedem der Längsseiten des Gitterelements (14) oder der perforierten Platte hinzugefügt wird, bevor die Schaumschicht (42) direkt auf dem übrigen Teil des Gitterelements (14) oder der perforierten Platte befestigt wird.

3. Originalmodellstruktur (20', 20") nach einem der vorhergehenden Ansprüche, **dadurch gekennzeichnet, dass** die Schaumschicht (42) nach dem Aushärten gefräst wird und dass eine Glasfaserschicht (44) zu der gefrästen Schaumschicht (42) hinzugefügt wird.

4. Originalmodellstruktur (20', 20") nach Anspruch 3, **dadurch gekennzeichnet, dass** eine Epoxidschicht (48) oder eine Schaumschicht (48) zu der gehärteten Glasfaserschicht (44) hinzugefügt wird.

5. Verfahren zum Herstellern einer Originalmodellstruktur (20', 20") zum Formen großer Objekte, wie beispielsweise Rümpfe, Windturbinenblätter und Gondeln, wobei die Originalmodellstruktur (20', 20") umfasst:
- ein Basiselement (2);
- eine Mehrzahl von Rahmen (8, 9) mechanisch verbunden mit dem Basiselement (2);
- ein Gitterelement (14) oder perforierte Platte befestigt an Rohrelementen oder Verbindungselementen, die an dem Rahmen (8, 9) befestigt sind, und
- eine Oberfläche befestigt an dem Gitterelement (14) oder der perforierten Platte;
wobei die Oberfläche eine Schaumschicht (42) umfasst, die direkt an dem Gitterelement (14) oder der perforierten Platte befestigt ist, und wobei der Schaum die Lücken/Löcher in dem Gitterelement (14) oder der perforierten Platte ausfüllt;
**dadurch gekennzeichnet, dass** eine Glasfaserschicht (46, 46') zu ein oder mehreren kleineren Bereichen des Gitterelements (14) oder der perforierten Platte hinzugefügt wird, bevor die Schaumschicht (42) direkt auf dem übrigen Teil des Gitterelements (14) oder der perforierten Platte befestigt wird.

6. Verfahren zum Herstellen einer Originalmodellstruktur (20', 20") nach Anspruch 5, **dadurch gekennzeichnet, dass** eine Glasfaserschicht (46, 46') zu jedem der Längsseiten des Gitterelements (14) oder der perforierten Platte hinzugefügt wird, bevor die Schaumschicht (42) direkt auf dem übrigen Teil des Gitterelements (14) oder der perforierten Platte befestigt wird.

7. Verfahren zum Herstellen einer Originalmodellstruktur (20', 20") nach einem der Ansprüche 5-6, **dadurch gekennzeichnet, dass** die Schaumschicht (42) nach dem Aushärten gefräst wird und dass eine Glasfaserschicht (44) zu der gefrästen Schaumschicht (42) hinzugefügt wird.

8. Verfahren zum Herstellen einer Originalmodellstruktur (20', 20") nach einem der Ansprüche 5-7, **dadurch gekennzeichnet, dass** eine Epoxidschicht (48) oder eine Schaumschicht (48) zu der gehärteten Glasfaserschicht (44) hinzugefügt wird.

9. Verwendung einer Originalmodellstruktur (20', 20") nach einem der Ansprüche 1-4 zum Formen großer Objekte, wie beispielsweise Rümpfe, Windturbinenblätter und Gondeln.

## Revendications

1. Structure de modèle-maître (20', 20") pour mouler de gros objets tels que des coques, des pales et des nacelles d'éoliennes, laquelle structure de modèle-maître (20', 20") comprend :
- un élément de base (2) ;
- une pluralité de cadres (8, 9) raccordés mécaniquement à l'élément de base (2) ;
- un élément de grille (14) ou une plaque perforée fixé(e) à des éléments tubulaires ou des éléments de raccordement fixés aux cadres (8,9) et
- une surface fixée à l'élément de grille (14) ou à la plaque perforée ;
dans laquelle la surface comprend une couche de mousse (42) directement fixée à l'élément de grille (14) ou à la plaque perforée et la mousse remplit les intervalles/trous de l'élément de grille (14) ou de la plaque perforée ; **caractérisée en ce qu'**une couche de fibres de verre (46, 46') est ajoutée à une ou plus de zones mineures de l'élément de grille (14) ou de la plaque perforée avant que la couche de mousse (42) ne soit fixée directement à la partie restante de l'élément de grille (14) ou de la plaque perforée.

2. Structure de modèle-maître (20', 20") selon la revendication 1, **caractérisée en ce qu'**une couche de fibres de verre (46, 46') est ajoutée à chacun des côtés latéraux de l'élément de grille (14) ou de la plaque perforée avant que la couche de mousse (42) ne soit fixée directement à la partie restante de l'élément de grille (14) ou de la plaque perforée.

3. Structure de modèle-maître (20', 20") selon l'une quelconque des revendications précédentes, **caractérisée en ce que** la couche de mousse (42) est meulée après avoir été durcie et une couche de fibres de verre (44) est ajoutée à la couche de mousse meulée (42).

4. Structure de modèle-maître (20', 20") selon la revendication 3, **caractérisée en ce qu'**une couche d'époxyde (48) ou une couche de mousse (48) est ajoutée à la couche de fibres de verre durcie (44).

5. Procédé de fabrication d'une structure de modèle-maître (20', 20") pour mouler de gros objets tels que des pales et des nacelles d'éoliennes, laquelle structure de modèle-maître (20', 20") comprend :
- un élément de base (2) ;
- une pluralité de cadres (8, 9) raccordés mécaniquement à l'élément de base (2) ;
- un élément de grille (14) ou une plaque perforée fixé(e) à des éléments tubulaires ou des éléments de raccordement fixés aux cadres (8, 9) et
- une surface fixée à l'élément de grille (14) ou à la plaque perforée ;
dans lequel une couche de mousse (42) est directement fixée à l'élément de grille (14) ou à la plaque perforée de manière que la mousse remplisse les intervalles/trous de l'élément de grille (14) ou de la plaque perforée ; **caractérise en ce qu'**une couche de fibres de verre (46, 46') est ajoutée à une ou plus de zones mineures de l'élément de grille (14) ou de la plaque perforée avant que la couche de mousse (42) ne soit fixée directement à la partie restante de l'élément de grille (14) ou de la plaque perforée.

6. Procédé de fabrication d'une structure de modèle-maître (20', 20") selon la revendication 5, **caractérisé en ce qu'**une couche de fibres de verre (46, 46') est ajoutée à chacun des côtés latéraux de l'élément de grille (14) ou de la plaque perforée avant que la couche de mousse (42) ne soit fixée directement à la partie restante de l'élément de grille (14) ou de la plaque perforée.

7. Procédé de fabrication d'une structure de modèle-maître (20', 20") selon l'une quelconque des revendications 5 et 6, **caractérisé en ce que** la couche de mousse (42) est meulée après avoir été durcie et une couche de fibres de verre (44) est ajoutée à la couche de mousse meulée (42).

8. Procédé de fabrication d'une structure de modèle-maître (20', 20") selon l'une quelconque des revendications 5 à 7, **caractérisé en ce qu'**une couche d'époxyde (48) ou une couche de mousse (48) est ajoutée à la couche de fibres de verre durcie (44).

9. Utilisation d'une structure de modèle-maître (20', 20") selon l'une quelconque des revendications 1 à 4 pour mouler de gros objets tels que des coques, des pales et des nacelles d'éoliennes.
